Europäisches Patentamt

European Patent Office

Office européen des brevets

(11) Veröffentlichungsnummer: **0 037 456**
**A1**

# EUROPÄISCHE PATENTANMELDUNG

(21) Anmeldenummer: **81101215.2**

(22) Anmeldetag: **20.02.81**

(51) Int. Cl.³: **B 60 R 9/04**

(30) Priorität: **09.04.80 DE 3013649**

(43) Veröffentlichungstag der Anmeldung:
**14.10.81 Patentblatt 81/41**

(84) Benannte Vertragsstaaten:
**FR GB IT SE**

(71) Anmelder: **AUDI NSU AUTO UNION Aktiengesellschaft**
**Postfach 220 Ettingerstrasse**
**D-8070 Ingolstadt(DE)**

(72) Erfinder: **Köpfle, Emmerich**
**Rossinistrasse 27**
**D-8070 Ingolstadt(DE)**

(74) Vertreter: **Barske, Heiko, Dr.**
**AUDI NSU AUTO UNION Postfach 220 Ettingerstrasse**
**D-8070 Ingolstadt(DE)**

(54) **Kraftfahrzeug mit einem Dachgepäckträger.**

(57) Das Kraftfahrzeug weist zwei seitliche, mit dem Fahrzeugdach verbundene Mittelpfosten (3) auf. Der Dachgepäckträger (5), welcher sich durch Stützfüße (11) am Fahrzeugdach (13) abstützt, ist mittels Spannvorrichtungen an den Mittelpfosten (3) befestigbar.

EP 0 037 456 A1

./...

Croydon Printing Company Ltd.

Fig.1

Ingolstadt, den 13. Febr. 1981
IP 1652 Eur.    En/Dö

Kraftfahrzeug mit einem Dachgepäckträger

Die Erfindung betrifft ein Kraftfahrzeug mit einem Dachgepäckträger gemäß dem Oberbegriff des Anspruchs 1.

Bei Kraftfahrzeugen mit einem Dachgepäckträger ist es bekannt, den Dachgepäckträger mit in die Regenrinne des Fahrzeugs aufsetzbaren Stützen und Spannvorrichtungen zu versehen, welche nahe der Stützen die Regenrinnen hintergreifen.

Für Fahrzeuge, welche insbesondere aus aerodynamischen und stilistischen Gründen ohne eine Regenrinne ausgeführt werden, sind die vorgenannten Dachgepäckträger nicht verwendbar. Es wurde deshalb schon vorgeschlagen, Aufnahmeteile für den Dachgepäckträger durch das Fahrzeugdach hindurchzuführen. Dies ist jedoch aufwendig und gestaltet eine nachträgliche Ausrüstung mit einem Dachgepäckträger sehr teuer.

Aus dem DE-GM 79 20 050 ist ein Dachgepäckträger bekannt, der sich auf dem Fahrzeugdach im Bereich der Dachholme abstützt und dessen Spannvorrichtung der Fahrzeugtüre zugewandte Flansche der Dachholme hintergreifen. Obwohl in dem Ausführungsbeispiel gemäß dem DE-GM 79 20 050 eine Regenrinne ausgebildet ist, ist diese für die Befestigung des Dachgepäckträgers nicht zwingend erforderlich. Notwendig ist jedoch ein Vorsprung zwischen dem Fahrzeugdach und der Fahrzeugtüre. Dies schränkt die Gestaltung dieser Teile und des Dachholmes ein. Außerdem ist zwischen der Fahrzeugtüre und dem Dachholm ein ausreichend breiter Spalt für die Befestigungsteile des Dachgepäckträgers notwendig. Ein breiter Spalt für die Befestigungsteile des Dachgepäckträgers notwendig. Ein breiter Spalt ist in diesem Bereich unerwünscht, da er nicht nur stilistisch unschön wirkt, sondern dadurch auch verstärkt Windgeräusche auftreten können und die Abdichtung erschwert wird.

0037456

Der Erfindung liegt die Aufgabe zugrunde, ein gattungsgemäßes Kraftfahrzeug mit einem Dachgepäckträger zu schaffen, welches sich durch eine einfache Befestigungsmöglichkeit für den Dachgepäckträger auszeichnet, selbst wenn das Kraftfahrzeug ohne eine Regenrinne ausgebildet ist.

Die Aufgabe wird dadurch gelöst, daß der Dachgepäckträger auf jeder Seite eine Spannvorrichtung aufweist, mittels der er an den zugeordneten Mittelpfosten befestigbar ist. Bei dem erfindungsgemäßen Kraftfahrzeug ist der Dachgepäckträger auf jeder Seite mit nur einer Spannvorrichtung befestigt, wodurch die Montage und Demontage wesentlich erleichtert wird. Durch die Befestigung des Dachgepäckträgers an den Mittelpfosten ist eine derartige Ausbildung besonders vorteilhaft bei Kraftfahrzeugen ohne eine Regenrinne im Bereich des seitlichen Dachabschlusses einsetzbar.

Die Merkmale der Ansprüche 2 und 3 sind auf zwei unterschiedliche Befestigungsarten des Dachgepäckträgers an den Mittelpfosten des Kraftfahrzeuges gerichtet.

Vorteilhaft ist, wenn die Befestigungsöffnungen für die Spannvorrichtungen des Dachgepäckträgers bei nicht montiertem Dachgepäckträger durch eine Blende abdeckbar sind. Die Blende verhindert, daß durch die Befestigungsöffnung Feuchtigkeit in den Mittelpfosten eindringt. Außerdem wird durch das Verdecken der Befestigungsöffnung ein verbessertes Erscheinungsbild geschaffen.

Die Blende kann einschraubbar oder einklipsbar und beispielsweise mit einem Firmenemblem versehen sein.

Die Merkmale der Ansprüche 5 bis 7 sind auf weitere vorteilhafte Ausführungsformen der Erfindung gerichtet. Die Erfindung wird im folgenden anhand schematischer Zeichnungen beispielsweise und mit weiteren Einzelheiten erläutert.

0037456

Es stellen dar:

Fig. 1    einen Teil einer Fahrzeugkarosserie mit einem
          montierten Dachgepäckträger und

Fig. 2    einen Schnitt gemäß der Linie II-II in Fig. 1.

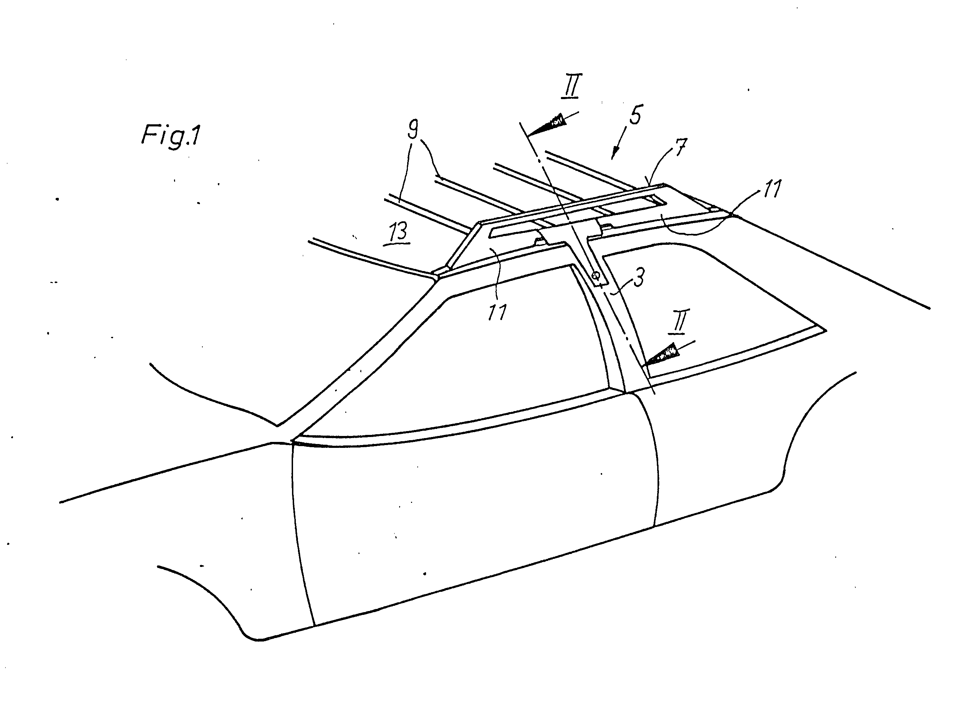

In Fig. 1 ist die linke Hälfte einer symmetrisch aufgebauten
Fahrzeugkarosserie mit einem Mittelpfosten 3, an dem ein Dachgepäckträger 5 befestigt ist, dargestellt.

Der Dachgepäckträger 5 besteht aus zwei Stegen 7, die mittels
vier Querstreben 9 miteinander verbunden sind.

Jeder Steg 7 ist mit zwei Stützfüßen 11 versehen, die am äußeren Rand des Fahrzeugdaches 13 aufliegen.

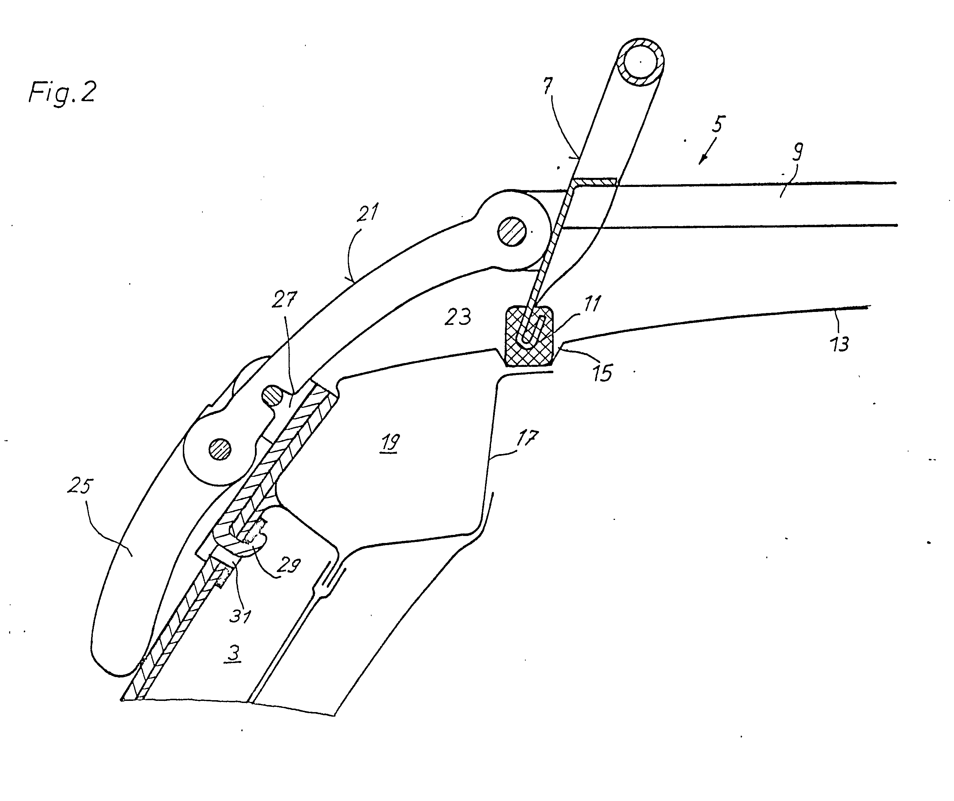

Wie aus Fig. 2 unmittelbar ersichtlich, ist jeder Stützfuß 11
von einem Kunststoffmantel umgeben und stützt sich in einer
Sicke 15 des Fahrzeugdaches 13 in unmittelbarer Nähe eines senkrechten Steges 17 des sich an den Mittelpfosten 3 anschließenden Dachholmes 19 ab. Mittels einer Spannvorrichtung 21 ist der
Dachgepäckträger 5 mit der Fahrzeugkarosserie verbindbar. Die
Spannvorrichtung 21 besteht aus einem an der Außenseite und in
der Mitte jedes Steges 7 drehbar gelagerten Bügel 23, der ebenfalls drehbar mit einem Griff 25 verbunden ist. Der Griff 25
wird von einem Lagerteil 27 aufgenommen, welches einen Haken
29 aufweist, der in eine Aussparung 31 im Mittelpfosten 3 eingreift.

Die Montage des Dachgepäckträgers 5 erfolgt in der Weise, daß
der Dachgepäckträger 5 mit nach oben angestellten Griffen 25 in
die Sicken 15 des Fahrzeugdaches 13 aufgesetzt wird. Anschließend
werden die Haken 29 jedes Lagerteiles 27 in die Aussparungen 31
eingeführt, nach dem zuvor die Aussparungen 31 abdeckende Blenden (nicht gezeigt) entfernt wurden. Werden die Griffe 25 anschließend nach unten verschwenkt, dann werden die Stützfüße 11
des Dachgepäckträgers 5 unter Vorspannung in die Sicken 15 des
Fahrzeugdaches 13 gepreßt.

Die Stege 17 mit den Stützfüßen 11 sind in Bezug auf das Fahrzeugdach 13 leicht konkav ausgebildet, so daß sichergestellt ist, daß bei Überladung des Dachgepäckträgers die Verbindung nicht locker wird.

Es versteht sich, daß der Dachgepäckträger in vielfacher Art und Weise an den Mittelpfosten befestigbar ist. So z.B. durch anders geartete Spannverschlüsse, Schraubspanner oder Exzenterverschlüsse. Diese können nicht nur durch eine Aussparung, sondern durch ein Gewinde oder sonstige Aufnahmeteile vom Mittelpfosten aufgenommen werden. Vorteilhaft ist eine eingeprägte Sicke im Mittelpfosten oder eine an den Mittelpfosten angeschweißte Lasche, so daß in diesen keine Feuchtigkeit eindringen kann.

# AUDI NSU AUTO UNION
Aktiengesellschaft

7456

Ingolstadt, den 2. Febr. 1981
IP 1652 Eur.    En/Dö

Kraftfahrzeug mit einem Dachgepäckträger

Patentansprüche:

1. Kraftfahrzeug mit einem Dachgepäckträger, welches Kraftfahrzeug wenigstens zwei seitliche, mit einem Fahrzeugdach verbundene Mittelpfosten aufweist und welcher Dachgepäckträger auf jeder Längsseite mit mindestens einem, auf eine Stützfläche am Fahrzeugdach aufsetzbaren Stützfuß versehen ist und durch mehrere Spannvorrichtungen lösbar mit dem Kraftfahrzeug verbindbar ist, d a d u r c h   g e k e n n - z e i c h n e t ,   daß der Dachgepäckträger (5) auf jeder Längsseite eine Spannvorrichtung (21) aufweist, mittels der er an dem zugeordneten Mittelpfosten (3) befestigbar ist.

2. Kraftfahrzeug nach Anspruch 1,   d a d u r c h   g e - k e n n z e i c h n e t ,   daß der obere Bereich des Mittelpfostens (3) eine Aussparung (31) aufweist, in die ein Teil (Haken 29) der Spannvorrichtung (21) einhängbar ist.

3. Kraftfahrzeug nach Anspruch 1,   d a d u r c h   g e - k e n n z e i c h n e t ,   daß im oberen Bereich des Mittelpfostens (3) ein Gewinde zur Aufnahme eines Beschlagteiles der Spannvorrichtung ausgebildet ist.

4. Kraftfahrzeug nach Anspruch 2 oder 3,   d a d u r c h   g e k e n n z e i c h n e t ,   daß die Befestigungsöffnung (Gewinde; Aussparung 21) bei nicht montiertem Dachgepäckträger durch eine Blende abdeckbar ist.

5. Kraftfahrzeug nach einem oder mehreren der vorhergehenden Ansprüche,   d a d u r c h   g e k e n n z e i c h n e t , daß die Stützfüße (11) des Dachgepäckträgers (5) in Sicken (15) des Fahrzeugdaches (13) aufliegen.

- 2 -

**0037456**

6. Kraftfahrzeug nach Anspruch 5, d a d u r c h  g e -
k e n n z e i c h n e t ,  daß sich die Sicken (15) längs
der beiden Dachholme (19) in unmittelbarer Nähe eines annähernd senkrechten Steges (17) jedes Dachholmes (19) erstrecken.

7. Kraftfahrzeug nach wenigstens einem der vorhergehenden Ansprüche,  d a d u r c h  g e k e n n z e i c h n e t ,
daß die Spannvorrichtung (21) auf jeder Längsseite des
Dachgepäckträgers (5) etwa in dessen Mitte angeordnet ist,
und daß der Dachgepäckträger in Bezug auf seine Längsachse
zur Montage unter Vorspannung leicht konvex ausgebildet ist.

Fig.1

Fig.2

2/2

0037456

Europäisches
Patentamt

# EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | FR - A - 996 379 (RENAULT) <br> * Fig. 1 * <br> -- | 1 | B 60 R 9/04 |
| | FR - A - 791 878 (A. ARDENUY PUIG) <br> * Fig. 2 * <br> -- | 1 | |
| | FR - A - 738 362 (O. LECANU-DESCHAMPS) <br> * Fig. 1 * <br> -- | 1 | |
| P | DE - A1 - 2 908 682 (DAIMLER-BENZ) <br> * Fig. 2 * <br> -- | 4 | **RECHERCHIERTE SACHGEBIETE (Int. Cl.³)** <br><br> B 60 R 9/00 |
| D,A | DE - U1 - 7 920 050 (PORSCHE) <br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | | | |
|---|---|---|---|
| X | Der vorliegende Recherchenbericht wurde für alle Patentansprüche erstellt. | | |
| **Recherchenort** <br> Berlin | **Abschlußdatum der Recherche** <br> 24-06-1981 | **Prüfer** <br> BECKER | |

EPA form 1503.1 06.78